# EUROPÄISCHE PATENTSCHRIFT

(11) **EP 3 606 781 B1**
(45) Veröffentlichungstag und Bekanntmachung des Hinweises auf die Patenterteilung: **27.01.2021**
(21) Anmeldenummer: 18715515.5
(22) Anmeldetag: 20.03.2018
(51) Int. Cl.: B60K 6/387, B60K 6/48, B60W 10/02, B60W 10/06, B60W 20/40, F16D 11/00, F16D 21/00

(54) **ANTRIEBSVORRICHTUNG MIT EINER KUPPLUNGSEINRICHTUNG, ANTRIEBSSYSTEM MIT DIESER ANTRIEBSVORRICHTUNG UND VERFAHREN ZUM BETRIEB DES ANTRIEBSYSTEMS**
DRIVE APPARATUS HAVING A CLUTCH DEVICE, DRIVE SYSTEM HAVING SAID DRIVE APPARATUS AND METHOD FOR OPERATING THE DRIVE SYSTEM
DISPOSITIF D'ENTRAÎNEMENT COMPRENANT UN DISPOSITIF D'EMBRAYAGE, SYSTÈME D'ENTRAÎNEMENT COMPRENANT CE DISPOSITIF D'ENTRAÎNEMENT ET PROCÉDÉ PERMETTANT DE FAIRE FONCTIONNER CE SYSTÈME D'ENTRAÎNEMENT

(30) Priorität: 06.04.2017 DE 102017205942
(43) Veröffentlichungstag der Anmeldung: 12.02.2020
(73) Patentinhaber: Bayerische Motoren Werke Aktiengesellschaft, 80809 München (DE)
(72) Erfinder: JUNG, Thomas, 80999 Muenchen (DE); KOBLER, Sebastian, 80801 München (DE); HOESS, Bernhard, 80995 Muenchen (DE)
(86) Internationale Anmeldenummer: PCT/EP2018/056917
(87) Internationale Veröffentlichungsnummer: WO 2018/184826

(56) Entgegenhaltungen:
- EP-A2- 2 311 680
- DE-A1- 4 434 019
- DE-A1-102007 050 235
- DE-A1-102009 047 766
- DE-A1-102015 201 931
- DE-A1-102015 211 436

## Beschreibung

Die Erfindung betrifft eine Antriebsvorrichtung mit einer Kupplungseinrichtung mit einer Formschluss- und einer Reibschlusskupplung gemäß dem Oberbegriff des ersten Patentanspruchs sowie ein Antriebssystem mit einer solchen Antriebsvorrichtung gemäß Patentanspruch 10 und ein Verfahren zu dessen Betrieb gemäß Patentanspruch 12, eine derartige Vorrichtung ist aus dem Stand der Technik bekannt, insbesondere aus der DE 10 2015 201 931 A1.

Nachfolgend ist die Erfindung in Zusammenhang mit einem Hybridfahrzeugantriebsstrang beschrieben, dies ist nicht als eine Einschränkung der Erfindung zu verstehen. Bei solch einem Antriebsstrang werden zum Antrieb des Kraftfahrzeugs eine Brennkraftmaschine und ein elektromechanischer Energiewandler kombiniert. Insbesondere um die Wirkungsgradvorteile und andere Vorteile eines solchen Konzepts ausnützen zu können, ist der Betrieb in unterschiedlichsten Betriebspunkte der unterschiedlichen Antriebsmaschinen notwendig. Zur Ansteuerung der Brennkraftmaschine und des elektromechanischen Energiewandlers in der genannten Art und Weise hat es sich als vorteilhaft erwiesen, spezielle Kupplungsvorrichtungen einzusetzen.

Die DE 10 2015 201 931 A1 schlägt ein Kupplungssystem mit einer Formschluss und einer Reibschlusskupplung vor, welche bezogen auf die Drehmomentübertragung parallelgeschaltet sind.

Es ist eine Aufgabe der Erfindung, eine Antriebsvorrichtung mit einer Kupplungseinrichtung mit verbesserter Steuerbarkeit der Antriebsvorrichtung anzugeben, sowie ein Antriebssystem mit einer solchen Antriebsvorrichtung und ein Verfahren zu dessen Betrieb. Diese Aufgabe wird durch einen Gegenstand gemäß dem ersten Patentanspruch gelöst, sowie durch ein Antriebssystem gemäß Patentanspruch 10 und ein Betriebsverfahren gemäß Patentanspruch 12, zu bevorzugende Weiterbildungen der Erfindung sind Gegenstand der abhängigen Patentansprüche.

Im Sinne der Erfindung ist unter einer Antriebsvorrichtung eine Einrichtung zum Antreiben eines Kraftfahrzeugs, insbesondere also eines Fahrzeugs zur Personenbeförderung, sogenannter Pkw, zu verstehen. Die Antriebsvorrichtung ist dazu vorgesehen, Antriebsleistung (Drehzahl, Drehmoment) für das Überwinden von Fahrwiderständen (Luftwiderstand, Reibungswiderstand, Steigungswiderstand, Beschleunigungswiderstand usw.) dieses Kraftfahrzeugs zur Verfügung zu stellen.

Im Sinne der Erfindung ist unter einer Brennkraftmaschine eine thermische Kraftmaschine mit innerer Verbrennung, insbesondere in Hubkolbenbauweise, zu verstehen. Vorzugsweise ist unter einer Brennkraftmaschine eine Hubkolbenbrennkraftmaschine zu verstehen, welche nach dem Otto- oder Dieselprinzip betreibbar ist. Zum Abgeben einer Antriebsleistung (Drehzahl, Drehmoment) weist diese Brennkraftmaschine eine sogenannte Kurbelwelle auf. Systembedingt ist die von einer solchen Brennkraftmaschine abgegebene Antriebsleistung mit Schwingungen, insbesondere Drehmomentschwingungen, sogenannte Drehschwingungen, behaftet. Derartige Schwingungen sind in der Regel unerwünscht und die Antriebsvorrichtung weist zum Reduzieren dieser Schwingungen eine Drehschwingungsreduzierungseinrichtung auf.

Im Sinne der Erfindung ist unter einer Drehschwingungsreduzierungseinrichtung eine Einrichtung zum Reduzieren von Drehschwingungen der von der Brennkraftmaschine abgegebenen Antriebsleistung zu verstehen. Derartige Drehschwingungsreduzierungseinrichtungen sind aus dem Stand der Technik in unterschiedlichen Bauarten bekannt, insbesondere sind diese als Drehschwingungsdämpfer oder Drehschwingungstilger oder als kombinierte Einrichtung, welche sowohl einen Drehschwingungsdämpfer als auch einen Drehschwingungstilger aufweist, bekannt. Insbesondere ein Zweimassenschwungrad ist eine derartige, aus dem Stand der Technik bekannte, Drehschwingungsreduzierungseinrichtung. Dabei ist auch eine große Anzahl weiterer Drehschwingungsreduzierungseinrichtungen, welche ebenfalls mit dieser Antriebsvorrichtung verwendbar sind, aus dem Stand der Technik bekannt.

Die von der Brennkraftmaschine zum Antreiben des Kraftfahrzeugs bereitgestellte Antriebsleistung wird von einem Antriebsstrang des Kraftfahrzeugs an ein antreibbares Rad geleitet und von diesem auf die Fahrbahnoberfläche übertragen.

Im Sinne der Erfindung ist unter einem antreibbaren Rad eine Radreifen-Kombination des Kraftfahrzeugs zu verstehen. Vorzugsweise weist das Kraftfahrzeug mehrere antreibbare Räder auf, vorzugsweise eine oder mehrere antreibbare Achsen, wobei an einer antreibbaren Achse 2 dieser antreibbaren Räder angeordnet sind.

Systembedingt ist bei einer solchen Antriebsvorrichtung eine Einrichtung zum Unterbrechen beziehungsweise Herstellen des Kraftflusses bzw. der Drehmomentübertragung zwischen der Kurbelwelle und dem antreibbaren Rad vorzusehen. Zum selektiven Unterbrechen beziehungsweise Herstellen der Drehmomentübertragung von der Kurbelwelle auf das antreibbare Rad ist daher eine Kupplungseinrichtung mit einer Kupplungs-Eingangsseite und einer Kupplungs-Ausgangsseite vorgesehen.

Im Sinne der Erfindung ist unter einer solchen Kupplungseinrichtung eine Einrichtung zu verstehen, welche die Kupplungs-Eingangsseite und die Kupplungs-Ausgangsseite aufweist, wobei die Drehmomentübertragung von der Kupplungs-Eingangsseite auf die Kupplungs-Ausgangsseite selektiv unterbrechbar beziehungsweise herstellbar ist. Zum Unterbrechen und Herstellen der Drehmomentübertragung zwischen der Kupplungs-Eingangsseite und der Kupplungs-Ausgangsseite weist die Kupplungseinrichtung eine Reibschlusskupplung und eine Formschlusskupplung auf. Dabei ist sowohl mit der Reibschlusskupplung wie auch mit der Formschlusskupplung eine Drehmomentübertragung selektiv unterbrechbar beziehungsweise herstellbar. Zum Herstellen dieser Drehmomentübertragung ist die Kupplungs-Eingangsseite mit der Kupplungs-Ausgangsseite mittels der Formschlusskupplung und der Reibschlusskupplung selektiv koppelbar.

Die Reibschlusskupplung weist zum Unterbrechen beziehungsweise Herstellen dieser Drehmomentübertragung eine reibschlüssige Verbindung auf. Die Formschlusskupplung weist zum Unterbrechen beziehungsweise Herstellen dieser Drehmomentübertragung eine formschlüssige Verbindung auf.

Diese beiden Kupplungen (Reibschlusskupplung, Formschlusskupplung) sind jeweils sowohl mit der Kupplungs-Eingangsseite, wie auch mit der Kupplungs-Ausgangsseite, drehfest verbunden, insbesondere sind diese also, bezogen auf die Drehmomentübertragung parallel geschalten, so dass eine Drehmomentübertragung von der Kupplungs-Eingangsseite auf die Kupplungs-Ausgangsseite ermöglicht ist, sobald eine einzige der beiden Kupplungen (Reibschlusskupplung oder Formschlusskupplung) geschlossen ist, selbst wenn die andere der beiden Kupplungen geöffnet ist.

Bei herkömmlichen Antriebsvorrichtungen ist zwischen der Kurbelwelle der Brennkraftmaschine und der herkömmlichen Kupplungseinrichtung eine Einrichtung zum Reduzieren der Drehschwingungen angeordnet, erfindungsgemäß wird diese Anordnung verändert und die Kupplungs-Eingangsseite ist drehfest, vorzugsweise unmittelbar drehfest, mit der Kurbelwelle verbunden und die Kupplungs-Ausgangsseite ist drehfest, vorzugsweise unmittelbar drehfest, mit der Drehschwingungsreduzierungseinrichtung verbunden, insbesondere mit einer Eingangsseite der Drehschwingungsreduzierungseinrichtung (Reduzierer-Eingangsseite). Insbesondere durch diese Ausgestaltung der Antriebsvorrichtung ist die Drehschwingungsreduzierungseinrichtung, bezogen auf die Drehmomentübertragung von der Kurbelwelle zu dem antreibbaren Rad, nach beziehungsweise unmittelbar hinter der Kupplungseinrichtung angeordnet.

Im Sinne der Erfindung bedeutet eine drehfeste Verbindung, dass die derart miteinander verbundenen Bauteile oder Einrichtungen die gleiche Rotationsachse bei der Übertragung der Antriebsleistung aufweisen und mit der gleichen Drehzahl Rotieren und bevorzugt, wenigstens im Wesentlichen, drehstarr miteinander verbunden sind, insbesondere mittels einer Welle-Nabeverbindung. Weiter vorzugsweise bedeutet "unmittelbar drehfest" in diesem Sinn, dass sich derart miteinander verbundenen Bauteile unmittelbar kontaktieren oder bevorzugt einstückig miteinander ausgebildet sind.

Mit dem vorgeschlagenen Antriebsystem ist eine besonders vorteilhafte Steuerung des Antriebssystems ermöglicht. Insbesondere ist die zum Starten der Brennkraftmaschine zu beschleunigende Drehmasse klein, da die Drehschwingungsreduzierungseinrichtung von der Kurbelwelle über die Kupplungseinrichtung abkoppelbar ist. Im Falle eines Impulsstarts, bei welchem die Brennkraftmaschine aus dem Stillstand bis zu einer Startdrehzahl hochgeschleppt und dann in den befeuerten Betrieb versetzt wird, ist diese geringe Drehmasse von Vorteil. Weiter ist, insbesondere aufgrund der Parallelschaltung der beiden Kupplungen (Reibschlusskupplung, Formschlusskupplung) zum einen ein großes Drehmoment übertragbar und zum anderen sind die beiden Kupplungen auf unterschiedlichste Anforderungen auslegbar.

In einer bevorzugten Ausführungsform der Erfindung ist die Formschlusskupplung als eine spielfreie Formschlusskupplung ausgebildet, so dass im geschlossenen Zustand dieser Kupplung Antriebsdrehmoment von der Kurbelwelle auf die Kupplungs-Ausgangsseite spielfrei übertragbar ist. Insbesondere aufgrund der Anordnung der Kupplungseinrichtung vor der Drehschwingungsreduzierungseinrichtung wird die Kupplungseinrichtung mit einem ungleichförmigen Antriebsdrehmoment beaufschlagt, es hat sich gezeigt, dass es bezüglich der Lebensdauer und insbesondere auch bezüglich der Geräusche bei der Übertragung des Antriebsdrehmoments vorteilhaft ist, wenn die Formschlusskupplung als spielfreie Formschlusskupplung ausgebildet ist.

In einer weiter bevorzugten Ausführungsform ist die Formschlusskupplung als eine Zahnkupplung ausgebildet. Insbesondere bei einer Zahnkupplung ist zum Ausbilden der selektiv herstellbaren formschlüssigen Verbindung ein Verzahnungsprofil vorgesehen, welches in ein passendes Gegenprofil selektiv eingreift bzw. wenn diese drehmomentleitende Verbindung nicht hergestellt ist, nicht in dieses eingreift.

Vorzugsweise ist zum Herstellen einer drehmomentleitenden Verbindung zwischen der Kupplungs-Eingangsseite und der Kupplungs-Ausgangsseite ein Formschlusselement mittels eines Formschlussaktuators in der Formschlusskupplung bewegbar. Vorzugsweise ist das Formschlusselement, wenigstens abschnittsweise und insbesondere wenigstens abschnittsweise in einem Bereich, welcher zum Ausbilden der drehmomentleitenden Verbindung eingerichtet ist, wenigstens im Wesentlichen, konusförmig ausgebildet. Insbesondere mittels eines konusförmigen Formschlusselements ist auf einfache Weise eine selektiv herstellbare formschlüssige Verbindung darstellbar. Insbesondere wird die Spielfreiheit in der Formschlusskupplung durch eine spezielle Formgebung des Formschlusselements sowie insbesondere auch durch eine in einer Aktuierungsrichtung elastische Anbindung des Formschlusselements beziehungsweise beweglicher Teile dieses Formschlusselements an den Formschlussaktuator, erreicht. Insbesondere durch die elastische Anbindung an den Formschlussaktuator ist das Formschlusselement in der geschlossenen Position (Drehmoment ist übertragbar) vorgespannt und die Drehmomentübertragung ist mit der Formschlusskupplung spielfrei ermöglicht.

Vorzugsweise sind die Reibschlusskupplung und die Formschlusskupplung unabhängig voneinander ansteuerbar und weisen zur Ansteuerung einen Reibschlussaktuator und den Formschlussaktuator auf. Insbesondere durch eine unabhängige Steuerbarkeit der Kupplungen (Reibschlusskupplung, Formschlusskupplung) ist eine flexibel steuerbare Antriebsvorrichtung darstellbar. Vorzugsweise sind die Reibschlusskupplung und die Formschlusskupplung durch einen gemeinsamen Aktuator, insbesondere den Formschlussaktuator, steuerbar. Insbesondere durch einen gemeinsamen Aktuator ist ein einfacher Aufbau der Antriebsvorrichtung ermöglicht.

Vorzugsweise ist wenigstens einer der Aktuatoren und bevorzugt sind alle Aktuatoren als elektromagnetischer, elektromechanischer, pneumatischer oder hydraulischer Aktuator ausgebildet.

In einer bevorzugten Ausführungsform ist die Formschlusskupplung als eine sogenannte selbsthaltende Kupplung ausgebildet. Selbsthaltende Kupplungen sind aus dem Stand der Technik als solche bekannt. Insbesondere bei einer selbsthaltenden Kupplung sind keine von außen auf diese aufzubringenden Kräfte notwendig, um die Kupplung in einem geschlossenen Betriebszustand zu halten, insbesondere wird bei einer selbsthaltenden Kupplung in geschlossenem Zustand durch das zu übertragende Antriebsdrehmoment eine Betätigungskraft hervorgerufen, welche diese im geschlossenen Zustand (Drehmoment ist übertragbar) hält.

In einer bevorzugten Ausführungsform der Erfindung ist die Reibschlusskupplung als eine Ein- oder Mehrscheibenkupplung, mit wenigstens einer oder vorzugsweise einer Vielzahl von Reiblamellen zur Drehmomentübertragung, ausgebildet. Dabei ist diese wenigstens eine Reiblamellen zum Ausbilden der reibschlüssigen Verbindung für die selektive Drehmomentübertragung mit dieser Reibschlusskupplung ausgebildet. Insbesondere Ein- und mehr Scheibenkupplungen haben sich als besonders zuverlässige Kupplungen im Kraftfahrzeugbau erwiesen.

In einer bevorzugten Ausführungsform der Erfindung ist die Formschlusskupplung als eine sogenannte "normaly closed" Kupplung und die Reibschlusskupplung als eine sogenannte "normaly open" Kupplung ausgebildet. Dabei ist eine normaly closed Kupplung derart zu verstehen, dass diese Kupplung im unbetätigten Zustand, insbesondere also wenn keine äußere Betätigungskraft auf diese Kupplung aufgebracht wird, sich in einem geschlossenen Betriebszustand befindet, in welchem ein Drehmoment mit dieser übertragbar ist. Eine normaly open Kupplung ist dabei derart zu verstehen, dass diese Kupplung im unbetätigtem Zustand, insbesondere also wenn keine äußere Betätigungskraft auf diese Kupplung aufgebracht ist, sich in einem geöffneten Betriebszustand befindet, in welchem kein Drehmoment mit dieser übertragbar ist. Insbesondere durch eine derartige Ausgestaltung der Kupplungseinrichtung ist die Antriebsvorrichtung energieeffizient steuerbar, da die normaly closed Kupplung regelmäßig ohne Energieaufwand geschlossen ist und die normaly open Kupplung bedarfsgerecht dazu steuerbar ist, beziehungsweise ohne Energieaufwand in einem geöffneten Zustand ist.

In einer bevorzugten Ausführungsform der Erfindung ist mit der Reibschlusskupplung für sich genommen maximal ein Reibschlussdrehmoment übertragbar. Weiter ist mit der Formschlusskupplung für sich genommen maximal ein Formschlussdrehmoment übertragbar. Dabei bedeutet für sich genommen in diesem Sinn, in Bezug auf die Kupplungseinrichtung, dass jeweils nur eine der beiden Kupplungen (Formschlusskupplung, Reibschlusskupplung) geschlossen ist und die jeweils andere geöffnet ist, so dass das Drehmoment von der Kupplungs-Eingangsseite auf die Kupplungs-Ausgangsseite ausschließlich durch die geschlossene Kupplung alleine übertragen wird.

Vorzugsweise sind die Formschlusskupplung und die Reibschlusskupplung derart ausgelegt, dass dieses Formschlussdrehmoment größer ist als dieses Reibschlussdrehmoment. Bei der vorgeschlagenen Ausgestaltung des Antriebssystems, bei welcher die Kupplungseinrichtung unmittelbar mit der Kurbelwelle verbunden ist, wirkt auf diese Kupplungseinrichtung ein besonders großes Drehmoment, sogenanntes Zündmoment der Brennkraftmaschine.

Dieses Zündmoment beziehungsweise die Größe dieses Zündmoments wird insbesondere durch die Verbrennung eines Brennstoff-Luftgemisches in einer Brennkammer der Brennkraftmaschine und aufgrund der geringen zu beschleunigenden Drehmasse der Brennkraftmaschine verursacht. Da die Formschlusskupplung über weite Betriebsphasen der Antriebsvorrichtung, insbesondere wenn Antriebsleistung von der Brennkraftmaschine für den Antrieb des Kraftfahrzeugs bereitgestellt wird, geschlossen ist, ist es besonders vorteilhaft diese als normaly closed Kupplung auszubilden und weiter vorzugsweise zur Übertragung des Zündmoments zu befähigen, also auf die Übertragung dieses Zündmoments ausschließlich mit der Formschlusskupplung auszulegen.

Weiter vorzugsweise ist es vorteilhaft die Reibschlusskupplung auf ein Startdrehmoment der Brennkraftmaschine auszulegen, wobei unter diesem Startdrehmoment das Drehmoment zu verstehen ist, welches auftritt, wenn die Kurbelwelle der Brennkraftmaschine während eines Startvorgangs, insbesondere während eines Impuls- oder Schleppstarts, vorzugsweise aus dem Stillstand, beschleunigt wird, um aus dem unbefeuerten Zustand (kein Kraftstoff wird verbrannt) in den befeuerten Zustand (Kraftstoff wird verbrannt) überführt zu werden. Dabei ist dieses Startdrehmoment kleiner als das Zündmoment und insbesondere durch eine solche Auslegung der Kupplungen (Formschlusskupplung, Reibschlusskupplung) ist eine besonders kompakte Kupplungseinrichtung darstellbar.

In einer bevorzugten Ausführungsform weist die Drehschwingungsreduzierungseinrichtung eine Primärseite und eine Sekundärseite auf. Die Primärseite ist, insbesondere zum Verringern von Drehschwingungen, drehelastisch mit der Sekundärseite verbunden, dabei ist für die drehelastische Kopplung wenigstens eine Federeinrichtung vorgesehen. Insbesondere ist bei einem Zweimassenschwungrad die sogenannte Primärmasse als Primärseite ausgebildet und die Sekundärmasse als Sekundärseite und diese sind mittels einer Federeinrichtung drehelastisch miteinander verbunden. Vorzugsweise ist die Ausgangsseite der Kupplungseinrichtung drehfest, vorzugsweise unmittelbar drehfest, mit der Primärseite der Drehschwingungsreduzierungseinrichtung verbunden. Insbesondere mittels einer derartigen Ausgestaltung der Antriebsvorrichtung ist ein besonders platzsparender Aufbau dieser erreichbar.

In einer weiter bevorzugten Ausführungsform der Erfindung ist die Kupplungs-Ausgangsseite vorzugsweise einstückig mit der Primärseite der Drehschwingungsreduzierungseinrichtung ausgebildet und bevorzugt ist die Kupplungsausgangsseite in die Primärseite der Drehschwingungsreduzierungseinrichtung integriert. Insbesondere mittels einer solchen Ausgestaltung ist eine weitere Reduzierung des Bauraumbedarfs erreichbar.

Weiter ist ein Antriebssystem für ein Hybridfahrzeug vorgesehen, welches eine Antriebsvorrichtung gemäß dem ersten Patentanspruch aufweist. Weiter weist dieses Antriebssystem eine Trennkupplung, einen als Antriebsmotor ausgebildeten elektromechanischen Energiewandler zum Bereitstellen von Antriebsleistung für den Antrieb des Fahrzeugs, insbesondere also einen sogenannter Traktionsmotor, und ein schaltbares Getriebe auf. Unter einem schaltbaren Getriebe ist in diesem Sinn ein Geschwindigkeitswechselgetriebe mit wenigstens zwei unterschiedlichen, schaltbaren Übersetzungsverhältnissen zwischen einer Getriebeeingangs- und einer Getriebeausgangswelle zu verstehen.

Bezogen auf die Drehmomentübertragung in Richtung von der Kurbelwelle der Brennkraftmaschine zu dem antreibbaren Rad ist der elektromechanische Energiewandler vor dem schaltbaren Getriebe und nach der Drehschwingungsreduzierungseinrichtung angeordnet.

Die Trennkupplung ist vorzugsweise zum selektiven Unterbrechen der Drehmomentübertragung von der Kurbelwelle zu dem antreibbaren Rad eingerichtet und ist weiter vorzugsweise zwischen dem elektromechanischen Energiewandler und der Drehschwingungsreduzierungseinrichtung angeordnet. Insbesondere mittels dieser Anordnung ist die Drehmomentübertragung von der Kurbelwelle zu dem elektromechanischen Energiewandler mittels der Trennkupplung unterbrechbar, insbesondere bei geöffneter Trennkupplung ist ein elektrischer Fahrmodus ermöglicht, bei welchem die Brennkraftmaschine stillsteht und somit verlustfrei ist.

In einer bevorzugt Ausführungsform der Erfindung ist in dem schaltbaren Getriebe eine Getriebekupplung angeordnet. Dabei ist diese Getriebekupplung zum selektiven Unterbrechen der drehmomentleitenden Verbindung zwischen der Getriebeeingangs- und der Getriebeausgangswelle eingerichtet. Bei einem derartigen schaltbaren Getriebe ist das Übersetzungsverhältnis zwischen der Getriebeeingangs- und der Getriebeausgangswelle vorzugsweise in diskreten Stufen, sogenannten Gängen, oder kontinuierlich veränderbar. Mit der Getriebekupplung ist somit insbesondere die drehmomentleitende Verbindung zwischen dem elektromechanischen Energiewandler und dem antreibbaren Rad selektiv unterbrechbar. Insbesondere mittels einer derartigen Getriebekupplung sind weitere Betriebsmodi des Antriebssystems darstellbar. Weiter wird ein Verfahren zum Betrieb eines Antriebssystems gemäß Anspruch 10 vorgeschlagen. Bei diesem Verfahren ist es vorgeschlagen, bei einem Impulsstart der Brennkraftmaschine die Reibschlusskupplung in einen geschlossenen Zustand zu versetzen oder in diesem zu halten und die Formschlusskupplung während dieses Impulsstarts, insbesondere während der Beschleunigung der Kurbelwelle, in einen geöffneten Zustand zu versetzen oder wenigstens zeitweise oder dauerhaft in diesem geöffneten Zustand zu halten. Dabei ist in diesem Sinn unter einem Impulsstart ein Startvorgang der Brennkraftmaschine zu verstehen, bei welchem die Kurbelwelle unter Ausnutzung von kinetischer Energie, insbesondere von in der Drehschwingungsreduzierungseinrichtung gespeicherter kinetischer Energie, aus dem Stillstand auf eine Startdrehzahl beschleunigt wird.

Im Sinne der Erfindung ist unter einem geöffneten Zustand der Formschlusskupplung oder der Reibschlusskupplung ein Zustand dieser zu verstehen, in welchem planmäßig kein Drehmoment mit der geöffneten Kupplung übertragbar ist. Weiter ist unter einem geschlossenen Zustand ein Zustand dieser Kupplung zu verstehen, in welchem planmäßig ein Drehmoment mit dieser übertragbar ist.

Im Sinne der Erfindung ist unter der Startdrehzahl der Brennkraftmaschine eine Drehzahl zu verstehen, ab welcher diese aus dem unbefeuerten Betrieb (kein Kraftstoff wird in Brennräumen der Brennkraftmaschine verbrannt) in einen befeuerten Betrieb (Kraftstoff wird in Brennräumen der Brennkraftmaschine verbrannt und diese ist zur Abgabe einer Antriebsleistung bereit) überführbar ist. Die Startdrehzahl ist dabei von der Bauform/-art der Brennkraftmaschine abhängig und rechnerisch oder versuchstechnisch ermittelbar. Vorzugsweise wird während des Impulsstarts auch der elektromechanische Energiewandler zum Bereitstellen eines beschleunigenden Drehmoments für die Kurbelwelle herangezogen. Insbesondere mittels eines solchen Startverfahrens kann vorteilhaft die Schlupfcharakteristik der Reibschlusskupplung zum Beschleunigen der Brennkraftmaschine genutzt werden und es ist ein komfortabler und schneller Startvorgang erreichbar.

In einem befeuerten Betrieb der Brennkraftmaschine, in welchem Antriebsleistung von der Kurbelwelle in Richtung zu dem antreibbaren Rad abgebbar ist beziehungsweise abgegeben wird, wird die Formschlusskupplung in einen geschlossenen Betriebszustand versetzt oder in diesem gehalten. Insbesondere mit der Formschlusskupplung sind große Drehmomente (Zünddrehmoment) übertragbar und insbesondere nach dem die Brennraftmaschine auf Startdrehzahl beschleunigt ist, kann die Formschlusskupplung einfach geschlossen werden und so ist ein sicheres Betriebsverfahren erreichbar.

In einer bevorzugt Ausführungsform des Verfahrens zum Betrieb der Brennkraftmaschine wird die Reibschlusskupplung beim befeuerten Betrieb der Brennkraftmaschine wenigstens zeitweise oder dauerhaft in einen geöffneten Zustand versetzt, oder sie wird dauerhaft in diesem Zustand gehalten.

Insbesondere wenn die Formschlusskupplung als eine normaly closed Kupplung und die Reibschlusskupplung als eine normaly open Kupplung ausgebildet ist, ist somit während eines Fahrbetriebs, bei welchem die Brennkraftmaschine Antriebsleistung zum Antrieb des Kraftfahrzeugs bereitstellt, keine Leistung zum Aufrechterhalten der drehmomentleitenden Verbindung zwischen der Kupplungs-Eingangsseite und der Kupplungs-Ausgangsseite notwendig und es ist ein effizienter Betrieb des Antriebssystems ermöglicht.

Nachfolgend sind einzelne Ausführungsformen der Erfindung sowie Einzelne Merkmale dieser anhand der dargestellten Figuren näher erläutert, dabei zeigt:
- Figur 1:: eine schematische Darstellung einer solchen Antriebsvorrichtung,
- Figur 2:: eine schematische Darstellung eines Antriebssystems mit Elektromaschine und einer solchen Antriebsvorrichtung.

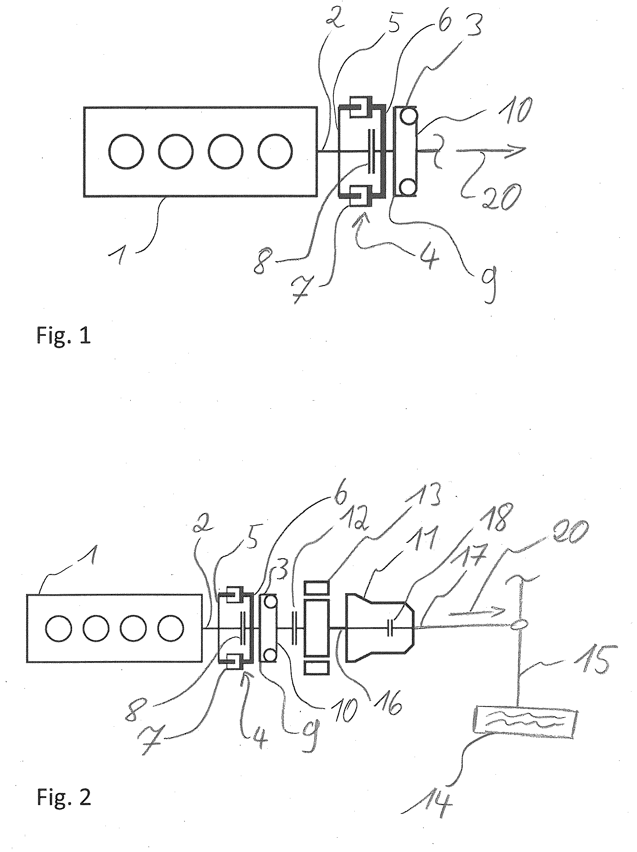

In Figur 1 ist eine schematisierte Antriebsvorrichtung dargestellt. Diese Antriebsvorrichtung weist eine in Hubkolbenbauweise ausgeführte Brennkraftmaschine 1 mit einer Kurbelwelle 2 auf. Die Kurbelwelle 2 ist drehfest mit der Kupplung-Eingangsseite 5 der Kupplungseinrichtung 4 verbunden. Die Kupplungs-Ausgangsseite 6 der Kupplungseinrichtung 4 ist drehfest mit der Primärseite 9 der als Zweimassenschwungrad ausgebildeten Drehschwingungsreduzierungseinrichtung 3 verbunden. Die Sekundärseite 10 der Drehschwingungsreduzierungseinrichtung 3 ist zur Abgabe von Antriebsleistung, welche von der Kurbelwelle 2 zum Antrieb des Kraftfahrzeugs bereitgestellt wird, in Richtung 20 auf eine Antriebsachse mit wenigstens einem antreibbaren Rad eingerichtet.

In Figur 2 ist ein schematisiertes Antriebssystem dargestellt. Dieses Antriebssystem weist die aus Figur 1 bekannte Antriebsvorrichtung auf. Weiter weist dieses Antriebssystem für ein Hybridfahrzeug eine Trennkupplung 12 zum selektiven Unterbrechen der Drehmomentübertragung von der Sekundärseite 10 der Drehschwingungsreduzierungseinrichtung 3 zu dem als Elektromotor/Generator ausgebildeten elektromechanischen Energiewandler 13 auf. Der elektromechanische Energiewandler 13 ist zum Bereitstellen einer Antriebsleistung für das Hybridfahrzeug eingerichtet und dabei drehfest mit der Getriebeeingangswelle 16 des schaltbaren Getriebes 11 verbunden.

Das schaltbare Getriebe 11 ist in stark vereinfachter Ausführung dargestellt, derartige Getriebe sind in unterschiedlichen Bauformen aus dem Stand der Technik bekannt, einige dieser Bauformen sind beispielsweise Planetenradgetriebe beziehungsweise Automatikgetriebe mit einem oder mehreren Umlaufgetrieberadsätzen, Doppelkupplungsgetriebe oder manuelles Schaltgetriebe und dergleichen.

Das schaltbare Getriebe 11 weist neben der Getriebeeingangswelle 16 die Getriebeausgangswelle 17 auf. Zum Unterbrechen der drehmomentleitenden Verbindung zwischen der Getriebeeingangswelle 16 und der Getriebeausgangswelle 17 weist das schaltbare Getriebe 11 die Getriebekupplung 18 auf. Mit der Getriebekupplung 18 ist die selektive Unterbrechung der Drehmomentübertragung von der Getriebeeingangswelle 16 auf die Getriebeausgangswelle 17 ermöglicht. Von der Getriebeausgangswelle 17 ist die von der Brennkraftmaschine 1 bzw. vom elektromechanischen Energiewandler 13 bereitgestellte Antriebsleistung in Richtung 20 auf die Antriebsachse 15 mit dem antreibbaren Rad 14 übertragbar.

**Bezugszeichenliste:**

| | |
|---|---|
| 1 | Brennkraftmaschine |
| 2 | Kurbelwelle |
| 3 | Drehschwi ngu ngsreduzieru ngsei nrichtu ng |
| 4 | Kupplungseinrichtung |
| 5 | Kupplungs-Eingangsseite |
| 6 | Kupplungs-Ausgangsseite |
| 7 | Formschlusskupplung |
| 8 | Reibschlusskupplung |
| 9 | Primärseite von 3 |
| 10 | Sekundärseite von 3 |
| 11 | Schaltbares Getriebe |
| 12 | Trennkupplung |
| 13 | Elektromechanischer Energiewandler |
| 14 | Antreibbares Rad |
| 15 | Antriebsachse |
| 16 | Getriebeeingangswelle |
| 17 | Getriebeausgangswelle |
| 18 | Getriebekupplung |

## Patentansprüche

1. Antriebsvorrichtung für ein Hybridfahrzeug mit einer Brennkraftmaschine (1), welche zum Abgeben einer Antriebsleistung eine Kurbelwelle (2) aufweist und mit einer Drehschwingungsreduzierungseinrichtung (3), welche zum Verringern von Drehschwingungen und zum Übertragen von Antriebleistung von der Kurbelwelle (2) in Richtung (20) zu einem antreibbaren Rad (14) des Kraftfahrzeugs eingerichtet ist und mit einer Kupplungseinrichtung (4) mit einer Kupplungs-Eingangsseite (5), einer Kupplungs-Ausgangsseite (6), einer Formschlusskupplung (7) und einer Reibschlusskupplung (8), wobei die Drehmomentübertragung von der Kupplungs-Eingangsseite (5) auf die Kupplungs-Ausgangsseite (6) und damit von der Kurbelwelle (2) auf das antreibbare Rad (14), selektiv herstellbar ist, wobei die Drehmomentübertragung von der Kupplungs-Eingangsseite (5) auf die Kupplungs-Ausgangsseite (6) ermöglicht ist, sobald wenigstens eine der beiden Kupplungen (7, 8) geschlossen ist wobei die Kupplungs-Eingangsseite (5) drehfest mit der Kurbelwelle (2) verbunden ist,
**dadurch gekennzeichnet, dass**
die Drehschwingungsreduzierungseinrichtung (3), bezogen auf die Drehmomentübertragung von der Kurbelwelle (2) in Richtung (20) zu dem antreibbaren Rad, nach der Kupplungseinrichtung (4) angeordnet ist und dass die Kupplungs-Ausgangsseite (6) drehfest mit der Drehschwingungsreduzierungseinrichtung (3) verbunden ist.

2. Antriebsvorrichtung für ein Kraftfahrzeug nach Anspruch 1, **dadurch gekennzeichnet, dass** die Formschlusskupplung (7) als eine spielfreie Formschlusskupplung (7) ausgebildet ist, so dass im geschlossenen Zustand dieser Kupplung (7) Drehmoment spielfrei von der Kupplungs-Eingangsseite (5) zur Kupplungs-Ausgangsseite (6) übertragbar ist.

3. Antriebsvorrichtung für ein Kraftfahrzeug nach Anspruch 2, **dadurch gekennzeichnet, dass** die Formschlusskupplung (7) als eine Zahnkupplung ausgebildet ist, dass zum Herstellen einer drehmomentleitenden Verbindung mit der Formschlusskupplung ein Formschlusselement mittels eines Formschlussaktuators bewegbar ist, dass das Formschlusselement, wenigstens abschnittsweise in einem Bereich, welcher zum Ausbilden der selektiven drehmomentleitenden Verbindung eingerichtet ist, konusförmig ausgebildet ist.

4. Antriebsvorrichtung nach einem der vorhergehenden Ansprüche, **dadurch gekennzeichnet, dass** die Formschlusskupplung (7) als eine selbsthaltende Kupplung ausgebildet ist.

5. Antriebsvorrichtung nach einem der vorhergehenden Ansprüche, **dadurch gekennzeichnet, dass** die Reibschlusskupplung (8) als eine Ein- oder Mehrscheibenkupplung mit wenigstens einer oder einer Vielzahl von Reiblamellen zur selektiven Drehmomentübertragung ausgebildet ist.

6. Antriebsvorrichtung nach einem der vorhergehenden Ansprüche, **dadurch gekennzeichnet, dass** die Formschlusskupplung (7) als eine normaly closed Kupplung ausgebildet ist und dass die Reibschlusskupplung (8) als eine normaly open Kupplung ausgebildet ist.

7. Antriebsvorrichtung nach einem der vorhergehenden Ansprüche, **dadurch gekennzeichnet, dass** mit der Reibschlusskupplung (8) für sich genommen maximal ein Reibschlussdrehmoment von der Kupplungs-Eingangsseite (5) auf die Kupplungs-Ausgangsseite (6) übertragbar ist und dass mit der Formschlusskupplung (7) für sich genommen maximal ein Formschlussdrehmoment von der Kupplungs-Eingangsseite (5) auf die Kupplungs-Ausgangsseite (6) übertragbar ist und dass das Formschlussdrehmoment größer ist als das Reibschlussdrehmoment.

8. Antriebsvorrichtung nach einem der vorhergehenden Ansprüche,
**dadurch gekennzeichnet, dass** die Drehschwingungsreduzierungseinrichtung (3) eine Primärseite (9) und eine Sekundärseite (10) aufweist, dass die Primärseite (9) zum Verringern von Drehschwingungen drehelastisch mit der Sekundärseite (10) verbunden ist, dass die Kupplungs-Ausgangsseite (6) drehfest mit der Primärseite (9) verbunden ist.

9. Antriebsvorrichtung nach einem der vorhergehenden Ansprüche,
**dadurch gekennzeichnet, dass** die Kupplungs-Ausgangsseite (6) derart in die Primärseite (9) der Drehschwingungsreduzierungseinrichtung (3) integriert ist, dass diese einstückig miteinander ausgebildet sind.

10. Antriebssystem für ein Hybridfahrzeug mit einer Antriebsvorrichtung nach einem der vorhergehenden Ansprüche und mit einer Trennkupplung (12), einem elektromechanischen Energiewandler (13) und einem schaltbaren Getriebe (11), wobei, bezogen auf die Drehmomentübertragung von der Kurbelwelle (2) auf das antreibbare Rad (14), der elektromechanische Energiewandler (13) vor dem schaltbaren Getriebe (11) und nach der Drehschwingungsreduzierungseinrichtung (3) und die Trennkupplung (12) zwischen dem elektromechanischen Energiewandler (13) und der Drehschwingungsreduzierungseinrichtung (3) angeordnet ist und dass die Trennkupplung (12) zum selektiven Unterbrechen einer drehmomentleitenden Verbindung zwischen der Drehschwingungsreduzierungseinrichtung (3) und dem elektromechanischen Energiewandler (13) eingerichtet ist.

11. Antriebssystem nach Anspruch 10, **dadurch gekennzeichnet, dass** in dem schaltbaren Getriebe (11) eine Getriebekupplung (18) angeordnet ist, dass das schaltbare Getriebe (11) eine Getriebeeingangswelle (16) und eine Getriebeausgangswelle (17) aufweist, dass das Übersetzungsverhältnis zwischen diesen Getriebewellen (16), (17) veränderbar ist und dass die Getriebekupplung (18) zum selektiven Unterbrechen einer drehmomentleitenden Verbindung zwischen dem antreibbaren Rad (14) und dem elektromechanischen Energiewandler (13) eingerichtet ist.

12. Verfahren zum Betrieb eines Antriebssystems gemäß Anspruch 10 oder 11, **dadurch gekennzeichnet, dass** bei einem Impulsstart der Brennkraftmaschine (1), bei welchem die Kurbelwelle (2) unter Ausnutzung der in der Drehschwingungsreduzierungseinrichtung (3) gespeicherten Energie aus dem Stillstand auf eine Startdrehzahl beschleunigt wird, die Reibschlusskupplung (8) in einen geschlossenen Zustand versetzt oder in diesem gehalten wird und dass die Formschlusskupplung (7) während dieses Beschleunigens in einen geöffneten Zustand versetzt wird oder wenigstens zeitweise oder dauerhaft in diesem geöffneten Zustand gehalten wird und dass nach dem Impulsstart in einem befeuerten Betrieb der Brennkraftmaschine (1), in welchem Antriebsleistung von der Kurbelwelle (2) in Richtung (20) zu dem antreibbaren Rad (14) abgebbar ist, die Formschlusskupplung (7) in einen geschlossenen Betriebszustand versetzt wird oder in diesem gehalten wird.

13. Verfahren zum Betrieb einer Brennkraftmaschine nach Anspruch 12,
**dadurch gekennzeichnet, dass** die Reibschlusskupplung (8) beim befeuerten Betrieb der Brennkraftmaschine (1) wenigstens zeitweise oder dauerhaft in einen geöffneten Zustand versetzt wird oder dauerhaft in diesem Zustand gehalten wird.

## Claims

1. Drive apparatus for a hybrid vehicle with an internal combustion engine (1) which has a crankshaft (2) for the output of drive power, and with a torsional vibration reduction device (3) which is set up to decrease torsional vibrations and to transmit drive power from the crankshaft (2) in the direction (20) of a drivable wheel (14) of the motor vehicle, and with a clutch device (4) with a clutch input side (5), a clutch output side (6), a positively locking clutch (7) and a frictionally locking clutch (8), it being possible for the torque transmission to be established selectively from the clutch input side (5) to the clutch output side (6) and therefore from the crankshaft (2) to the drivable wheel (14), the torque transmission from the clutch input side (5) to the clutch output side (6) being enabled as soon as at least one of the two clutches (7, 8) is closed, the clutch input side (5) being connected fixedly to the crankshaft (2) so as to rotate with it, **characterized in that** the torsional vibration reduction device (3) is arranged downstream of the clutch device (4), in relation to the torque transmission from the crankshaft (2) in the direction (20) of the drivable wheel, and **in that** the clutch output side (6) is connected fixedly to the torsional vibration reduction device (3) so as to rotate with it.

2. Drive apparatus for a motor vehicle according to Claim 1, **characterized in that** the positively locking clutch (7) is configured as a play-free positively locking clutch (7), with the result that, in the closed state of the said clutch (7), torque can be transmitted without play from the clutch input side (5) to the clutch output side (6).

3. Drive apparatus for a motor vehicle according to Claim 2, **characterized in that** the positively locking clutch (7) is configured as a gear coupling, **in that** a positively locking element can be moved by means of a positively locking actuator in order to establish a torque-conducting connection to the positively locking clutch, and **in that** the positively locking element is of conical configuration at least in sections in a region which is set up to configure the selective torque-conducting connection.

4. Drive apparatus according to one of the preceding claims, **characterized in that** the positively locking clutch (7) is configured as a non-separable clutch.

5. Drive apparatus according to one of the preceding claims, **characterized in that** the frictionally locking clutch (8) is configured as a single-disc or multiple-disc clutch with at least one or a multiplicity of friction plates for the selective transmission of torque.

6. Drive apparatus according to one of the preceding claims, **characterized in that** the positively locking clutch (7) is configured as a normally closed clutch, and **in that** the frictionally locking clutch (8) is configured as a normally open clutch.

7. Drive apparatus according to one of the preceding claims, **characterized in that** a frictionally locking torque can be transmitted from the clutch input side (5) to the clutch output side (6) in a maximum manner by way of the frictionally locking clutch (8) per se, and **in that** a positively locking torque can be transmitted from the clutch input side (5) to the clutch output side (6) in a maximum manner by way of the positively locking clutch (7) per se, and **in that** the positively locking torque is greater than the frictionally locking torque.

8. Drive apparatus according to one of the preceding claims, **characterized in that** the torsional vibration reduction device (3) has a primary side (9) and a secondary side (10), **in that** the primary side (9) is connected in a rotationally elastic manner to the secondary side (10) in order to decrease torsional vibrations, and **in that** the clutch output side (6) is connected fixedly to the primary side (9) so as to rotate with it.

9. Drive apparatus according to one of the preceding claims, **characterized in that** the clutch output side (6) is integrated into the primary side (9) of the torsional vibration reduction device (3) in such a way that they are connected to one another in one piece.

10. Drive system for a hybrid vehicle with a drive apparatus according to one of the preceding claims and with a separating clutch (12), an electromechanical energy converter (13) and a shiftable transmission (11), the electromechanical energy converter (13) being arranged, in relation to the transmission of torque from the crankshaft (2) to the drivable wheel (14), upstream of the shiftable transmission (11) and downstream of the torsional vibration reduction device (3), and the separating clutch (12) being arranged between the electromechanical converter (13) and the torsional vibration reduction device (3), and in that the separating clutch (12) is set up for selectively interrupting a torque-conducting connection between the torsional vibration reduction device (3) and the electromechanical energy converter (13).

11. Drive system according to Claim 10, **characterized in that** a transmission clutch (18) is arranged in the shiftable transmission (11), **in that** the shiftable transmission (11) has a transmission input shaft (16) and a transmission output shaft (17), **in that** the transmission ratio between the said transmission shafts (16), (17) is variable, and **in that** the transmission clutch (18) is set up for selectively interrupting a torque-conducting connection between the drivable wheel (14) and the electromechanical energy converter (13).

12. Method for operating a drive system according to Claim 10 or 11, **characterized in that**, in the case of an impulse start of the internal combustion engine (1), in the case of which impulse start the crankshaft (2) is accelerated from a standstill to a starting rotational speed with utilization of the energy which is stored in the torsional vibration reduction device (3), the frictionally locking clutch (8) is moved into a closed state or is held in the said state, and **in that**, during the said acceleration, the positively locking clutch (7) is moved into an open state or is held in the said state at least temporarily or permanently, and **in that**, after the impulse start, the positively locking clutch (7) is moved into a closed operating state or is held in the said state in a combustion operation of the internal combustion engine (1), in which operation drive power can be output from the crankshaft (2) in the direction (20) of the drivable wheel (14).

13. Method for operating an internal combustion engine according to Claim 12, **characterized in that**, in the case of combustion operation of the internal combustion engine (1), the frictionally locking clutch (8) is moved into an open state at least temporarily or permanently or is held in the said state permanently.

## Revendications

1. Dispositif d'entraînement pour un véhicule hybride, comprenant un moteur à combustion interne (1) qui présente un vilebrequin (2) pour fournir une puissance d'entraînement et comprenant un système de réduction des oscillations de torsion (3) qui est prévu pour réduire des oscillations de torsion et pour transférer la puissance d'entraînement depuis le vilebrequin (2) dans la direction (20) d'une roue motrice (14) du véhicule automobile, et comprenant un système d'embrayage (4) avec un côté d'entrée d'embrayage (5), un côté de sortie d'embrayage (6), un embrayage à engagement par correspondance géométrique (7) et un embrayage à engagement par friction (8), le transfert de couple pouvant être effectué de manière sélective depuis le côté d'entrée d'embrayage (5) au côté de sortie d'embrayage (6) et par conséquent du vilebrequin (2) à la roue motrice (14), le transfert de couple du côté d'entrée d'embrayage (5) au côté de sortie d'embrayage (6) étant possible dès qu'au moins l'un des deux embrayages (7, 8) est fermé, le côté d'entrée d'embrayage (5) étant connecté de manière solidaire en rotation au vilebrequin (2),
**caractérisé en ce que**
le système de réduction des oscillations de torsion (3) est disposé, par rapport au transfert de couple depuis le vilebrequin (2) dans la direction (20) de la roue motrice, après le système d'embrayage (4), et **en ce que** le côté de sortie d'embrayage (6) est connecté de manière solidaire en rotation au système de réduction des oscillations de torsion (3).

2. Dispositif d'entraînement pour un véhicule automobile selon la revendication 1, **caractérisé en ce que** l'embrayage à engagement par correspondance géométrique (7) est réalisé sous forme d'embrayage à engagement par correspondance géométrique sans jeu (7) de telle sorte que dans l'état fermé de cet embrayage (7), un couple puisse être transmis sans jeu du côté d'entrée d'embrayage (5) au côté de sortie d'embrayage (6) .

3. Dispositif d'entraînement pour un véhicule automobile selon la revendication 2, **caractérisé en ce que** l'embrayage à engagement par correspondance géométrique (7) est réalisé sous la forme d'un embrayage à dent, **en ce que** pour établir une liaison à transfert de couple avec l'embrayage à engagement par correspondance géométrique, un élément d'engagement par correspondance géométrique peut être déplacé au moyen d'un actionneur d'engagement par correspondance géométrique, **en ce que** l'élément d'engagement par correspondance géométrique est réalisé au moins en partie en forme de cône dans une région qui est prévue pour réaliser la liaison de transfert de couple sélective.

4. Dispositif d'entraînement selon l'une quelconque des revendications précédentes, **caractérisé en ce que** l'embrayage d'engagement par correspondance géométrique (7) est réalisé sous forme d'un embrayage à maintien automatique.

5. Dispositif d'entraînement selon l'une quelconque des revendications précédentes, **caractérisé en ce que** l'embrayage à engagement par friction (8) est réalisé sous la forme d'un embrayage à un ou plusieurs disques avec au moins une lamelle de friction ou une pluralité de lamelles de friction pour le transfert de couple sélectif.

6. Dispositif d'entraînement selon l'une quelconque des revendications précédentes, **caractérisé en ce que** l'embrayage à engagement par correspondance géométrique (7) est réalisé sous la forme d'un embrayage normalement fermé et **en ce que** l'embrayage à engagement par friction (8) est réalisé sous la forme d'un embrayage normalement ouvert.

7. Dispositif d'entraînement selon l'une quelconque des revendications précédentes, **caractérisé en ce qu'**avec l'embrayage à engagement par friction (8) à lui seul, au maximum un couple d'engagement par friction peut être transmis du côté d'entrée d'embrayage (5) au côté de sortie d'embrayage (6) et **en ce qu'**avec l'embrayage à engagement par correspondance géométrique (7) à lui seul au maximum un couple d'engagement par correspondance géométrique peut être transmis du côté d'entrée d'embrayage (5) au côté de sortie d'embrayage (6) et **en ce que** le couple d'engagement par correspondance géométrique est supérieur au couple d'engagement par friction.

8. Dispositif d'entraînement selon l'une quelconque des revendications précédentes, **caractérisé en ce que** le système de réduction des oscillations de torsion (3) présente un côté primaire (9) et un côté secondaire (10), **en ce que** le côté primaire (9) est connecté de manière élastique et rotative au côté secondaire (10) de manière à réduire les oscillations de torsion, et **en ce que** le côté de sortie d'embrayage (6) est connecté de manière solidaire en rotation au côté primaire (9).

9. Dispositif d'entraînement selon l'une quelconque des revendications précédentes, **caractérisé en ce que** le côté de sortie d'embrayage (6) est intégré dans le côté primaire (9) du système de réduction des oscillations de torsion (3) de telle sorte que ceux-ci soient réalisés d'une seule pièce l'un avec l'autre.

10. Système d'entraînement pour un véhicule hybride, comprenant un dispositif d'entraînement selon l'une quelconque des revendications précédentes et un embrayage de séparation (12), un convertisseur d'énergie électromécanique (13) et une boîte de vitesses (11), dans lequel, par rapport au transfert de couple du vilebrequin (2) à la roue motrice (14), le convertisseur d'énergie électromécanique (13) est disposé avant la boîte de vitesses (11) et après le système de réduction des oscillations de torsion (3) et l'embrayage de séparation (12) est disposé entre le convertisseur d'énergie électromécanique (13) et le système de réduction des oscillations de torsion (3) et en ce que l'embrayage de séparation (12) est prévu pour interrompre de manière sélective une liaison de transfert de couple entre le système de réduction des oscillations de torsion (3) et le convertisseur d'énergie électromécanique (13).

11. Système d'entraînement selon la revendication 10, **caractérisé en ce que** dans la boîte de vitesses (11) est disposé un embrayage de transmission (18), **en ce que** la boîte de vitesses (11) présente un arbre d'entrée de transmission (16) et un arbre de sortie de transmission (17), **en ce que** le rapport de démultiplication entre ces arbres de transmission (16), (17) peut être modifié et **en ce que** l'embrayage de transmission (18) est prévu pour interrompre de manière sélective une liaison de transfert de couple entre la roue motrice (14) et le convertisseur d'énergie électromécanique (13).

12. Procédé pour faire fonctionner un système d'entraînement selon la revendication 10 ou 11, **caractérisé en ce que** dans le cas d'un démarrage par impulsion du moteur à combustion interne (1), dans lequel le vilebrequin (2) est accéléré en utilisant l'énergie stockée dans le système de réduction des oscillations de torsion (3) depuis l'arrêt jusqu'à un régime de démarrage, l'embrayage à engagement par friction (8) est déplacé dans un état fermé ou est maintenu dans celui-ci et l'embrayage à engagement par correspondance géométrique (7), pendant cette accélération, est amené à un état ouvert ou est au moins maintenu temporairement ou de manière durable dans cet état ouvert et **en ce qu'**après le démarrage par impulsion, dans un fonctionnement à combustion du moteur à combustion interne (1), dans lequel la puissance d'entraînement est transmise du vilebrequin (2) dans la direction (20) de la roue motrice (14), l'embrayage à engagement par correspondance géométrique (7) est amené à un état de fonctionnement fermé ou est maintenu dans celui-ci.

13. Procédé pour faire fonctionner un moteur à combustion interne selon la revendication 12, **caractérisé en ce que** l'embrayage à engagement par friction (8), pendant un fonctionnement à combustion du moteur à combustion interne (1), est amené au moins temporairement ou de manière durable dans un état ouvert ou est maintenu de manière durable dans cet état.
